Europäisches Patentamt

European Patent Office

Office européen des brevets

(11) Veröffentlichungsnummer: **0 440 103 A2**

# EUROPÄISCHE PATENTANMELDUNG

(21) Anmeldenummer: **91100962.9**

(22) Anmeldetag: **25.01.91**

(51) Int. Cl.⁵: **H01L 31/048**, H01L 31/042, E04D 13/00

(30) Priorität: **31.01.90 DE 4002711**

(43) Veröffentlichungstag der Anmeldung:
**07.08.91 Patentblatt 91/32**

(84) Benannte Vertragsstaaten:
**AT BE CH DE DK ES FR GB GR IT LI LU NL SE**

(71) Anmelder: **BMC MELCHIOR SOLARTECHNIK KG**
**Robbelshan 14**
**W-5630 Remscheid(DE)**

(72) Erfinder: **Melchior, Bernd**
**Robbelshan 14**
**W-5630 Remscheid 1(DE)**

(74) Vertreter: **Cohausz & Florack Patentanwälte**
**Postfach 14 01 61 Schumannstrasse 97**
**W-4000 Düsseldorf 1(DE)**

(54) **Dachziegel oder Dachstein mit Solarplatte.**

(57) Die Erfindung betrifft einen Dachziegel/Dachstein aus einer vollflächigen Platte aus Ton, Keramik, Beton oder Kunststoff als Träger einer an der Oberseite befestigten Solarplatte mit photovoltaischen Solarzellen, die Solarplatte an der Oberseite des Dachziegels/Dachsteins derart formschlüssig befestigt ist, daß zumindest auf zwei einander gegenüberliegenden Seiten das Material des Dachziegels/Dachsteins in der Weise vorsteht, daß es einen Bereich insbesondere Rand der Solarplatte übergreift, so daß die Solarplatte gegen ein Anheben nach oben gesichert ist.

Fig. 1

EP 0 440 103 A2

## DACHZIEGEL ODER DACHSTEIN MIT SOLARPLATTE

Die Erfindung betrifft einen Dachziegel/Dachstein aus einer vollflächigen Platte aus Ton, Keramik, Beton oder Kunststoff als Träger einer an der Oberseite befestigten Solarplatte mit photovoltaischen Solarzellen.

Die Integration der Photovolatic (PV) in die Architektur mit handelsüblichen Modulen stößt auf zahlreiche technische und optische Probleme, DE 19 00 069, DE-GM 79 20 669, DE 34 19 299, DE-GM 82 12 100, DE 33 37 658. So müssen für die Befestigung konventioneller PV.-Module Befestigungselemente durch die Dachhaut auf die tragende Dachkonstruktion montiert werden, die individuell an das jeweilige Dachhautsystem angepaßt werden müssen. Eine Standardisierung ist schwierig und aufgrund kleiner Stückzahlen in Handarbeit kaum kalkulierbar. Die Befestigung der handelsüblichen PV.-Module erfordert sturmfeste und korrosionsgeschützte Konstruktionen, die so fixiert sein müssen, daß sie sich nicht im Laufe der Zeit lokkern und klappernde Geräusche verursachen.

Das Durchstoßen einer konventionellen Dachhaut verursacht zwangsläufig Abdichtungs- und anschließend Dichtigkeitsprobleme. So ist die Langzeitdichtigkeit einer verletzten durchstoßenen Dachhaut durch die täglichen thermischen Spannungen sowie durch die Altersbewegungen des Daches nicht garantiert und kann zu großen Schäden führen. Auch ist diese Befestigungstechnik kostspielig sowohl in den Materialkomponenten als auch im Personalaufwand speziell ausgebildeter Fachkräfte.

Zur unbefriedigenden Technik kommt ein optisch inakzeptabler Eindruck eines auf der traditionellen Dachhaut unharmonisch schwebenden Photovoltaic-Moduls. Eine farbliche Anpassung des blauen oder schwarzen Moduls mit silbernen oder gefärbten Rahmen an die Farbstruktur des Daches ist nicht möglich und stößt auf Ablehnung. Eine Massenproduktion zur Kostendegression der Photovoltaic wird durch diese konventionelle PV.-Technik nicht initiiert.

Aufgabe der Erfindung ist es, einen Dachziegel oder Dachstein zu schaffen, der bei einfacher Konstruktion, Herstellung und Montage eine kostengünstige technische und optische Integration der Photovoltaic in die Architektur ermöglicht.

Diese Aufgabe wird erfindungsgemäß dadurch gelöst, daß die Solarplatte an der Oberseite des Dachziegels/Dachsteins derart formschlüssig befestigt ist, daß zumindest auf zwei einander gegenüberliegenden Seiten das Material des Dachziegels/Dachsteins in der Weise vorsteht, daß es einen Bereich insbesondere Rand der Solarplatte übergreift, so daß die Solarplatte gegen ein Anheben nach oben gesichert ist.

Hierdurch können Befestigungsweisen benutzt werden, die eine Herstellung des Dachziegels bzw. Dachsteins durch übliche Dachziegel-Herstellungsverfahren erlauben und der Dachziegel kann auch ohne Modul zum Decken des Daches verwendet werden.

Ein nachträgliches Anbringen des Moduls ist durch jeden Laien durchführbar.

Besonders vorteilhaft ist es, wenn die Solarplatte den Dachziegel/Dachstein derart übergreift, daß der Dachziegel/ Dachstein unterfasst wird. Hierbei können zum Untergreifen des Dachziegels/Dachsteins an der Solarplatte seitlich Klammern vorstehen. Eine sehr einfache Konstruktion und Handhabung bei sicherer Befestigung wird erreicht, wenn die Solarplatte ihre befestigte Stellung durch Verschieben in ihrer Ebene erreicht.

Auch wird hierzu vorgeschlagen, daß er an der Unterseite als auch an der Oberseite in den Bereichen, die von benachbarten Dachziegeln/Dachsteinen bedeckt werden, die üblichen Dachziegelformen und -falze aufweist.

Eine besonders einfache und sichere Befestigung wird erreicht, wenn die Oberseite eine konkave Ausnehmung aufweist, an deren oberen Rand die Solarplatte befestigt ist. Ferner ist hierdurch die Solarplatte hinterlüftet und gekühlt. Auch wird ein Kabelkanal gebildet. Hierbei sollte der obere Rand der konkaven Ausnehmung den Rand der Solarplatte ganz oder abschnittsweise übergreifen. Auch ist hierbei von Vorteil, wenn der Rand der Solarplatte im rillen-, nuten- oder rinnenförmigen Rand formschlüssig einliegt.

Besonders vorteilhaft für Herstellung und Handhabung ist es, wenn die Solarplatte biegsam ist und sich in die Ausnehmung soweit hineindrücken läßt, daß der Rand der Solarplatte aus der oder den Rille(n), Nute(n) oder Rinne(n) heraustritt bzw. den vorstehenden oberen Randwulst der Ausnehmung schnappend überwindet. Hierzu kann die Ausnehmung den Abschnitt eines Zylindermantels bilden, dessen Achse parallel zur Falllinie des Dachziegels/Dachsteins liegt.

Auch ist von Vorteil, wenn der von der Ausnehmung gebildete und von der Solarplatte bedeckte Hohlraum als Kabelkanal und/oder als Belüftungskanal dient. Eine gute Kühlung bei einfachster Form des Kanals wird erreicht, wenn der von der Ausnehmung gebildete und von der Solarplatte bedeckte Hohlraum im oberen und unteren Bereich des Dachziegels/ Dachsteins offen ist.

Hierbei kann zur Bildung der oberen Öffnung die Solarplatte die Ausnehmung im oberen Bereich nicht bedecken. Auch ist von Vorteil, wenn im Bereich der unteren Öffnung in der Ausnehmungswand ein Schlitz oder eine Kerbe zum Einlegen eines elektrischen Anschlußkabels ist.

Um ein Herausrutschen des Moduls zu verhindern wird vorgeschlagen, daß im Rand der Ausnehmung mindestens ein Vorsprung ist, der in eine Ausnehmung im Rand der Solarplatte eingreift. Ferner kann von Vorteil sein, wenn die Solarplatte in oder an der Ausnehmung angeklebt ist.

Eine besonders vorteilhafte zusätzliche oder alternative Befestigungsweise ist, wenn der Dachziegel/Dachstein mehrere Vorsprünge, insbesonder Zapfen aufweist, die in entsprechend geformten Öffnungen der Solarplatte einliegen. Alternativ kann aber auch die Solarplatte mehrere Vorsprünge, insbesondere Zapfen aufweisen, die in entsprechend geformten Öffnungen des Dachziegels/Dachsteins einliegen.

Eine architektonische in abfallende Linien aufgeteilte Dachfläche wird erreicht, wenn der von der Solarplatte und dem benachbarten Dachziegel/Dachstein nicht bedeckte abfallende Längsrand des Dachziegels/Dachsteins wulstförmig nach oben gewölbt ist. Eine optische Verbesserung wird erreicht, wenn die Solarplatte eine texturierte, strukturierte, und/oder weichreflektierende Oberfläche aufweist.

Für die Langzeitgebrauchsfähigkeit einer Solarbedachung ist entscheidend, daß die Solarzellen nicht parziell verschmutzen und dadurch an Leistung verlieren. Deshalb wird vorgeschlagen, daß die Solarplatte eine antihaftende, schmutzabweisende Beschichtung aufweist. Eine gute optische Qualität über lange Zeit wird erreicht, wenn die Solarplatte eine herbizide, fungizide und/oder antimoosansetzende Beschichtung aufweist. Auch ist von Vorteil, wenn die Solarplatte im oberen Bereich des Dachziegels/Dachsteins so von der vorderen Kante des überliegenden Ziegels entfernt angebracht ist, daß diese vordere Kante des überliegenden Ziegels keinen Schatten auf die Solarzellen wirft.

Ein optimales Aussehen wird erreicht, wenn der Mittelfeld-Dachziegel sowie das Gesamt-Dachziegel/Dachstein-System vorwiegend die gleiche Farbe wie die Solarplatte aufweist. Besonders vorteilhaft ist es, wenn das Dachziegel/Dachstein-System vorwiegend gleiche Reflektionswerte aufweist.

Von Vorteil ist auch, daß die Solarplatte an der regenablaufenden Kante keine wulstartige, aufwerfende, wasserstauende Umrandung hat.

Ein Ausführungsbeispiel der Erfindung ist in der Zeichnung dargestellt und wird im folgenden näher beschrieben. Es zeigen

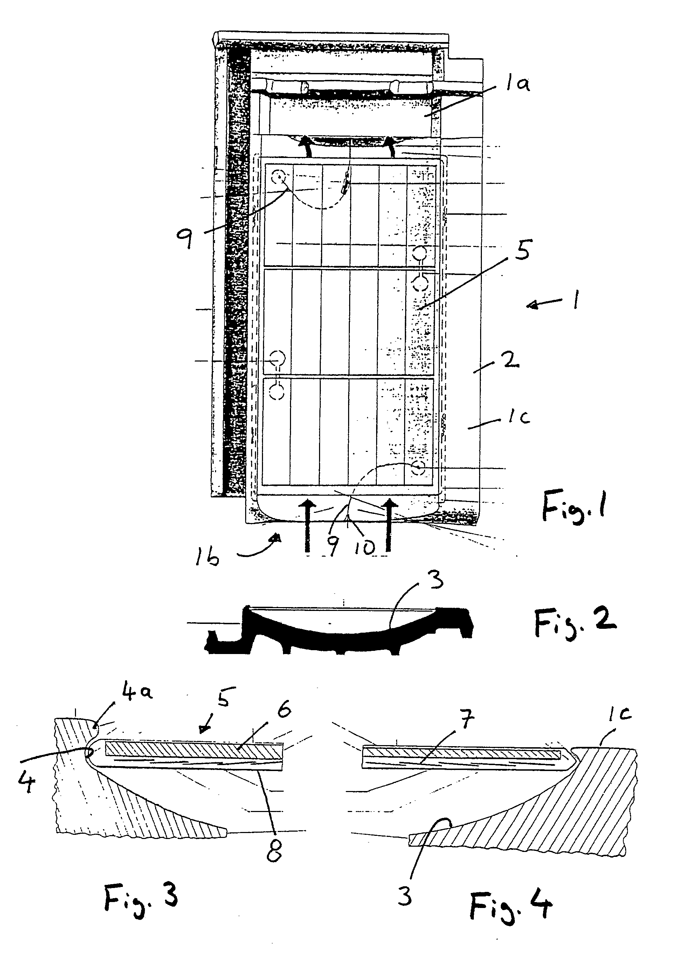

Figur 1     eine Vorderansicht des Dachziegels/Dachsteins mit oben befestigter Solarplatte,

Figur 2     einen Querschnitt durch den Dachziegel/Dachstein,

Figur 3     einen Ausschnitt aus Figur 2 in einer ersten Ausführungsform und

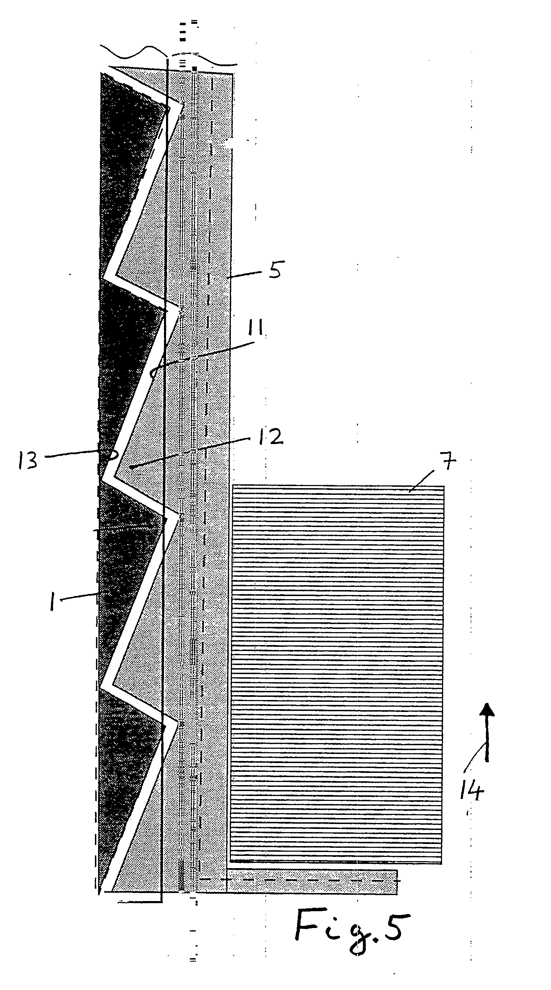

Figur 4     einen Ausschnitt aus Figur 2 in einer zweiten Ausführungsform,

Figur 5     einen Schnitt durch den Dachziegel/Dachstein in seiner Ebene im Bereich des Seitenrandes der Solarplatte

Figur 6     eine Draufsicht und zwei Seitenansichten eines Dachziegels/Dachsteins, bei dem die Solarplatte durch Klammern befestigt ist.

Figur 7     eine perspektivische Ansicht eines Dachziegels/ Dachsteins mit zugenförmigen Vorsprüngen

Figur 8     einen Schnitt durch einen Dachstein mit wulstförmigen Vorsprüngen, die in seitlichen Nuten der Solarplatte einliegen.

Das Photovoltaic-Dachziegel/Dachstein-System besteht aus zwei Komponenten:

Das Basiselement ist ein Mittelfeld-Dachziegel oder Dachstein 1 in der traditionellen verzahnenden, verpfalzenden, überlappenden Konstruktion. Die vordere Oberfläche 2 des Dachziegels/Dachsteins weist eine teilzylindrische Mulde 3 auf. Die abgesenkte Mulde 3 bzw. Fläche bildet eine Rinne bzw. einen Kanal, öffnet sich nach vorne und steigt im hinteren Teil abgerundet nach oben. In den beiden Längsflanken sind hinterschnittene Nuten 4 mit horizontalen Versätzen (Riffelung) zur Aufnahme der zwei Seitenränder des rahmenlosen Photovoltaic-Moduls 5 eingearbeitet.

Dieser Dachziegel/Dachstein wird konventionell vom ortsansässigen Dachdecker nach traditioneller Handwerksart und DIN-Vorschriften verlegt. Das gesamte Dach des Hauses ist aufgrund der traditionellen Dachziegel/DachsteinKonstruktion schlagregen-schneesturmfest-dicht. Aus dem Gesamtdachziegelsystem (wie z.B. des Reformziegels) mit Ortsgang-, First-, Entlüfter-Halbziegeln ist lediglich der Mittelfeldziegel in der Oberfläche umgestaltet.

Das gesamte Dachziegel/Dachstein-System ist solarzellen-blau mit gleichen Reflektionswerten wie der Photovoltaic-Modul, damit ist die Gleichmäßigkeit und optische Harmonie des Daches gewährleistet.

Eine architektonische in abfallenden Linien aufgeteilte Dachfläche wird erreicht, wenn der von der Solarplatte 5 und dem benachbarten Dachziegel/Dachstein 1 nicht bedeckte abfallende Längsrand 1c des Dachziegels wulstförmig nach oben gewölbt ist.

Das zweite Element des Dachziegel/Dachstein-Systems ist das Photovoltaic-Modul 5. Dieser PV.-Modul 5 besteht aus einer dünnen 1,5 - 2,0 mm starken chemisch gehärteten, eisenfreien, hochlichttransparenten Glasscheibe 6. Unter diese Scheibe 6 sind Solarzellen 7 in Schindeltechnik in speziellen witterungsbeständigen Kunststofffolien einlamminiert. Der Einbettungskunststoff ist um die Glasscheibe 6 herumgezogen. Diese spezielle Lamminiertechnik garantiert einen mechanischen sowie chemischen Kantenschutz der Glasscheibe 6. Durch die Profilierung des Kantenschutzes wird eine sturmfeste Adaption des Moduls 5 an dem Dachziegel/Dachstein 1 gewährleistet.

Der untere rückseitige Abschluß des PV.-Moduls 5 bildet eine schwarze Folie 8 mit hohen Temperatur-Emmissions-Koeffizient zur schnellen effektiven rückseitigen Ableitung der Wärme an den Solarzellen 7.Durch diese Konstruktion wird der Tages- bzw. Jahreswirkungsgrad des Photovoltaic-Dachziegel/ Dachstein-Systems wesentlich erhöht.

Von besonderem Vorteil sind folgende Merkmale:

Die Solarplatte hat an der regenablaufenden Kante keine wulstartige, aufwerfende, wasserstauende Umrandung. Der Dachziegel/Dachstein und das Dachziegel/Dachstein-System weisen eine gleiche und/oder unterschiedliche Einfärbung wie die Solarplatte auf. Die Solarplatte und der Dachziegel/ Dachstein weisen gleiche Reflektionswerte auf. Die Solarplatte ist reflektionsfrei.

Auch kann in einer Ausführung die Solarplatte an der regenablaufenden Kante keine wulstartige, aufwerfende, wasserstauende Umrandung haben. Drei Reihen Solarzellen 7 in überlappender Schindeltechnik mit je sechs Einzelzellen in der Größe von 25 x 100 x 0,2 mm sind in dem Modul 5 eingebettet. Die überlappende Schindeltechnik der verschalteten Solarzellen 7 gewährleistet ein optisch einheitliches metallisch blaues Erscheinungsbild ohne störende silbere Kontaktbänder. Durch den Einsatz von 18 Hochleistungszellen 7 ist eine optimale Stromerzeugung ohne hohe Verluste gewährleistet. Die Leerlaufspannung liegt bei ca. 9 Volt, die Arbeits-Ladespannung liegt bei ca. 6 Volt. Bei einem Wirkungsgrad von 14% erzeugt der Modul bei vollem Sonnenschein (1 kw/m² eine Leistung von 6,3 Watt. Für einen m²- Dachfläche werden 14,5 Pfannen benötigt, dies ergibt eine m²-Leistung von 91,3 Watt.

Die elektrischen Anschlüsse an die Solarzellen 7 bestehen aus solarzellen-farbigen Kabeln 9, die aus dem Laminat witterungsfest herausgezogen sind. Die elektrische Verbindung der Module 5 untereinander erfolgt durch eine Quetschverbindung mit anschließender Verlötung und dichte Verkapselung über hoch-witterungsbeständige Schrumpfschläuche. Dies gewährt eine Langzeitverschaltung ohne Korrosion und Leistungsverlusten. In jede Kabelverbindung der Dachziegel/Dachstein-Module wird eine Rückstromdiode einlamminiert. Diese Rückstromdiode garantiert bei parziellen Abschattungen die Funktionsfähigkeit der Dachziegel/Dachstein-Module.

Zunächst wird das gesamte Dach traditionell vom ortsansässigen konventionellen Dachdecker mit Dachziegeln/ Dachsteinen ohne Module gedeckt. Anschließend werden nachträglich vom PV.-Elektriker die Photovoltaic-Module in den Mittelfeldziegel/-stein eingedrückt, fixiert und elektrisch miteinander verkabelt. Ein Druck auf den Ziegel/ Stein aufliegenden PV.-Modul wölbt diesen so nach innen, so daß sich seine Breite verkleinert. Dadurch rutscht er über die Kanten 4a der Längsnuten nach innen. Bei Entspannen dehnt sich der PV.-Modul in die Längsnuten ein. Er wird unverrückbar sturm- und langzeitfest in den Nuten fixiert.

Der Photovoltaic-Modul bildet mit dem Tal des Ziegels/Dachsteins den offenen Kanal 3. Die Innenhöhe liegt bei ca. 25 mm, die Breite bei ca. 160 mm. Nach vorne öffnet sich der Kanal senkrecht. Der PV.-Modul ist so konstruiert, daß er ca. 20 mm kürzer ist als das Tal im Ziegel/Stein. Es entsteht so eine horizontale Kanalöffnung 1b im hinteren Ziegel/Steinbereich. Diese hintere Öffnung 1b liegt ca. 25 mm vor der senkrechten Kanalöffnung 1a des darüberliegenden Ziegels/Steins. Durch diese Anordnung liegt die vordere Kante des überlappenden Dachziegels/Steins ca. 25 mm von dem darunter liegenden PV.-Dachziegel/Stein- Moduls entfernt. Dies bedeutet bei Schrägdächern, daß ein senkrechter Sonnenstrahl keine Abschattung des überliegenden Dachziegels/Steins auf den unterliegenden PV.-Modul erzeugt. Der Jahreswirkungsgrad wird dadurch wesentlich verbessert.

Der Kanal erfüllt zwei Funktionen:
1. Als belüftender Kühlkanal für die Wärmeabfuhr an den Solarzellen.
2. als Kabelschacht für die elektrische Verbindung der Module untereinander.

Jeder Ziegel/Stein 1 hat seinen eigenen Kanal 3. Die Einzelkanäle 3 der PV.-Dachziegel/Steine sind nicht miteinander verbunden. Eine kleine Nut 10 an der vorderen Kante des Ziegels/Steins dient zur Fixierung und unauffälligen Verlegung der elektrischen Kabel 9, damit auch bei Sturm die Kabel 9 sich nicht lösen können und klappernde Geräusche entstehen können.

Das Gewicht des Photovoltaic-Ziegels/Steins liegt bei ca. 3,5 kg und garantiert damit eine sturmfeste Auflage der Ziegel/Steine auf die Sparrenkonstruktion des Photovoltaic-Dachziegel/-stein-Systems. Die Photovoltaic-Module sind weitgehend wartungsfrei und garantieren eine Langzeitstabilität. Falls durch mechanische Einwirkungen PV.-Module defekt werden sollten, so können sie einfach und problemlos ausgetauscht werden, ohne daß der Ziegel/ Steinverband aufgedeckt werden muß. Durch Wölbung des PV.-Moduls nach oben wird er aus dem Ziegel/Stein ohne Mühe entfernt und kann gegen einen neuen PV.-Modul ausgetauscht werden.

Ein weiterer Vorteil des Photovoltaic-Dachziegel/-stein-Systems besteht in der nachträglichen suzessiven Erweiterung des Solargenerators, ohne daß das Dach verändert oder neu gedeckt werden muß. Je nach Finanzlage des Bauherren kann er nachträglich die photovoltaische Stromerzeugung auf seinem Dach erweitern und ausbauen.

Die Zweikomponenten-Technologie des Photovoltaic-Dachziegel/-stein-Systems ermöglicht eine konventionelle, traditionelle Bedachung des Hauses mit anschließender nachträglicher auch schrittweiser Installation der Photovoltaic-Dachziegel/-stein-Module zum Aufbau einer zukunftsträchtigen Energieversorgung von der Sonne.

Figur 5 zeigt eine Ausführungsform, bei der die zwei Seitenränder 11 der Solarplatte 5 sägezahnförmige Vorsprünge 12 aufweisen, die in entsprechend geformten sägezahnförmigen Ausnehmungen 13 der Nuten 4 einliegen. Die Solarplatte wird insbesondere vom unteren freien Rand aus nach oben in Richtung des Pfeiles 14 in die Nuten 4 des Dachziegels/Dachsteins eingeschoben. Da die sägezahnförmigen Vorsprünge und Rücksprünge in Richtung des Pfeiles 14 einen kleinen und entgegengesetzt einen größeren Widerstand bieten, ist die Solarplatte leicht einschiebbar und danach sicher gehalten. Die Ausnehmungen können auch fehlen. In diesem Fall graben sich die Vorsprünge 12 in das Material der Nuten 4 des Dachziegels/Dachsteins ein.

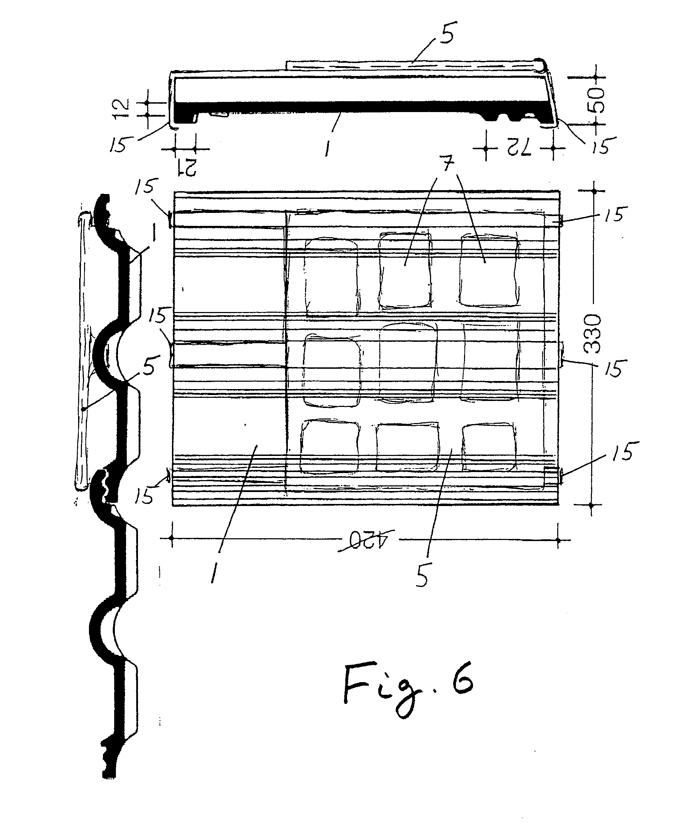

Figur 6 zeigt eine Befestigungsart mit seitlichen, insbesondere metallenen Klammern 15 an der Solarplatte, die mindestens zwei Ränder des Dachziegels/Dachsteins, insbesondere den oberen und unteren Rand, übergreifen und damit die Unterseite des Dachziegels/Dachsteins übergreifen.

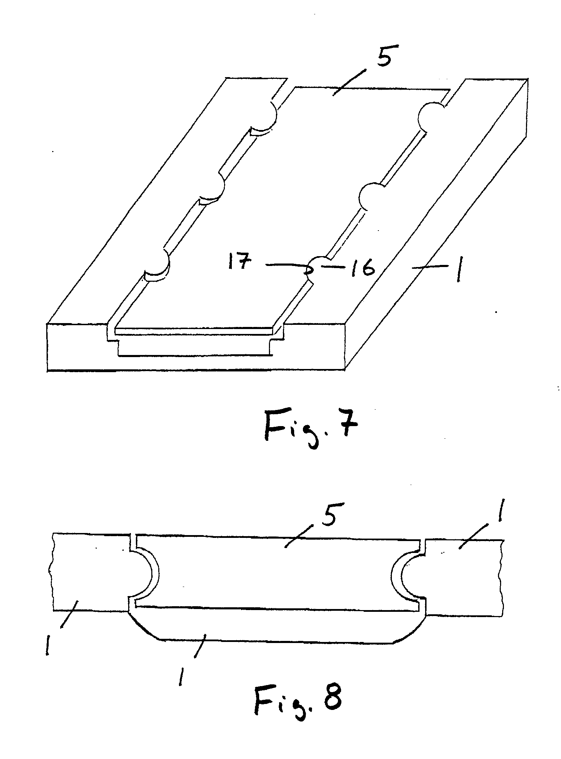

Bei den Ausführungsbeispielen nach Figuren 7 und 8 sind die übergreifenden Bereiche des Dachziegels/Dachsteins nicht über seine gesamte Länge ausgeführt, sondern nur kurze Vorsprünge oder Zungen 16, die die Solarplatte halten. Hierbei können im Rand der Solarplatte entsprechend den Vorsprüngen/Zungen 16 geformte Ausnehmungen 17 sein, um beim Einsetzen der Solarplatte die Vorsprünge/Zungen 16 durch die Ausnehmungen 17 zu führen und damit die Solarplatte nicht über ihre gesamte Länge einschieben zu müssen.

**Patentansprüche**

1. Dachziegel/Dachstein (1) aus einer vollflächigen Platte aus Ton, Keramik, Beton oder Kunststoff als Träger einer an der Oberseite befestigten Solarplatte (5) mit photovoltaischen Solarzellen (7), **dadurch gekennzeichnet**, daß die Solarplatte (5) an der Oberseite (2) des Dachziegels/Dachsteins derart formschlüssig befestigt ist, daß zumindest auf zwei einander gegenüberliegenden Seiten das Material des Dachziegels/ Dachsteins in der Weise vorsteht, daß es einen Bereich insbesondere Rand der Solarplatte übergreift, so daß die Solarplatte gegen ein Anheben nach oben gesichert ist.

2. Dachziegel/Dachstein aus einer vollflächigen Platte aus Ton, Keramik, Beton oder Kunststoff als Träger einer an der Oberseite befestigten Solarplatte (5) mit photovoltaischen Solarzellen (7), **dadurch gekennzeichnet**, daß die Solarplatte den Dachziegel/Dachstein (1) derart übergreift, daß der Dachziegel/Dachstein (1) unterfasst wird.

3. Dachziegel/Dachstein nach Anspruch 2, **dadurch gekennzeichnet**, daß zum Untergreifen des Dachziegels/Dachsteins (1) an der Solarplatte (5) seitlich Klammern vorstehen.

4. Dachziegel/Dachstein nach einem der vorherigen die Solarplatte ihre befestigte Stellung durch Verschieben in ihrer Ebene erreicht.

5. Dachziegel/Dachstein nach einem der vorherigen Ansprüche, **dadurch gekennzeichnet**, daß er an der Unterseite als auch an der Oberseite in den Bereichen, die von benachbarten Dachziegeln/Dachsteinen (1) bedeckt werden, die üblichen Dachziegel/Dachsteinformen und -falze aufweist.

6. Dachziegel/Dachstein nach einem der vorherigen Ansprüche, **dadurch gekennzeichnet**, daß die Oberseite (2) eine konkave Ausnehmung (3) aufweist, an deren oberen Rändern die Solarplatte (5) befestigt ist.

7. Dachziegel/Dachstein nach Anspruch 5 oder 6, **dadurch gekennzeichnet**, daß der Rand der Solarplatte (5) im rillen-, nuten- oder rinnenförmigen Rand des Dachziegels/Dachsteins formschlüssig einliegt.

8. Dachziegel/Dachstein nach einem der vorherigen Ansprüche, **dadurch gekennzeichnet**, daß die Solarplatte (5) biegsam ist und sich in die Ausnehmung (3) soweit hineindrücken läßt, daß der Rand der Solarplatte (5) aus der oder den Rille(n), Nute(n) (4) oder Rinne(n) heraustritt bzw. den vorstehenden oberen Randwulst der Ausnehmung schnappend überwindet.

9. Dachziegel/Dachstein nach einem der vorherigen Ansprüche, **dadurch gekennzeichnet**, daß der von der Ausnehmung (3) gebildete und von der Solarplatte (5) bedeckte Hohlraum im oberen und/oder unteren Bereich des Dachziegels/Dachsteins (1) offen ist.

10. Dachziegel/Dachstein nach Anspruch 9, **dadurch gekennzeichnet**, daß zur Bildung der oberen Öffnung (1a) die Solarplatte (5) die Ausnehmung (3) im oberen Bereich nicht bedeckt.

11. Dachziegel/Dachstein nach Anspruch 9 oder 10, **dadurch gekennzeichnet**, daß im Bereich der unteren Öffnung (1b) in der Ausnehmungswand ein Schlitz (10) oder eine Kerbe zum Einlegen eines elektrischen Anschlußkabels (9) angeordnet ist.

12. Dachziegel/Dachstein nach einem der vorherigen Ansprüche, **dadurch gekennzeichnet**, daß die Solarplatte (5) in oder an der Ausnehmung (3) angeklebt ist.

13. Dachziegel/Dachstein nach einem der vorherigen Ansprüche, **dadurch gekennzeichnet**, daß der Dachziegel/Dachstein (1) mehrere Vorsprünge, insbesondere Zapfen aufweist, die in entsprechend geformten Öffnungen der Solarplatte einliegen.

14. Dachziegel/Dachstein nach einem der vorherigen Ansprüche, **dadurch gekennzeichnet**, daß die Solarplatte mehrere Vorsprünge, insbesondere Zapfen aufweist, die in entsprechend geformten Öffnungen des Dachziegels/Dachsteins einliegen.

15. Dachziegel/Dachstein nach einem der vorherigen Ansprüche, **dadurch gekennzeichnet**, daß die Solarplatte sägezahnförmige Vorsprünge aufweist.

16. Dachziegel/Dachstein nach Anspruch 15, **dadurch gekennzeichnet**, daß der Dachziegel/Dachstein (1) sägezahnförmige Ausnehmungen aufweist, in die die Vorsprünge der Solarplatte einliegen.

17. Dachziegel/Dachstein nach einem der vorherigen Ansprüche, **dadurch gekennzeichnet**, daß der von der Solarplatte (5) und dem benachbarten Dachziegel/ Dachstein (1) nicht bedeckte abfallende Längsrand (1c) des Dachziegels wulstförmig nach oben gewölbt ist.

Fig. 1

Fig. 2

Fig. 3

Fig. 4

Fig.5

Fig. 6

Fig. 7

Fig. 8